# NOUVEAU FASCICULE DE BREVET EUROPEEN

(11) **EP 1 688 471 B2**
(45) Date de publication et mention de la décision concernant l'opposition: **31.10.2012**
(45) Mention de la délivrance du brevet: 27.06.2007
(21) Numéro de dépôt: 06290054.3
(22) Date de dépôt: 09.01.2006
(51) Int. Cl.: C09J 103/02, B31F 5/04, D21H 17/24

(54) **Composition adhésive aqueuse contenant un produit de mélange à base d'amidon de légumineuses**
Wässrige adhesive Zusammensetzung enthaltend ein Mischungprodukt aus Stärke von Hülsenfrüchte
Aqueous adhesive composition containing a mixture product comprising starch of leguminous plants

(30) Priorité: 07.02.2005 FR 0501215
(43) Date de publication de la demande: 09.08.2006
(73) Titulaire: ROQUETTE FRERES, 62136 Lestrem (FR)
(72) Inventeur: Houze, Régis, 59551 Tourmignies (FR); Leroy, Thierry, 62136 Lestrem (FR); Gombert, Hervé, 62232 Hinges (FR); Corriette, Pascal, 62350 Robecq (FR)
(74) Mandataire: Cabinet Plasseraud

(56) Documents cités:
- EP-A- 1 352 939
- WO-A1-2004/044082
- FR-A- 2 846 662
- US-A- 5 286 769

## Description

L'invention concerne une composition adhésive, aqueuse contenant, en tout ou partie, un produit de mélange comprenant au moins un amidon de légumineuses et au moins un amidon issu de céréales et / ou de tubercules, destinée à l'assemblage de cartons ondulés.

Elle concerne plus particulièrement une composition adhésive aqueuse présentant une partie primaire, constituée essentiellement d'amidon(s) gélatinisé(s) et / ou gonflé(s), et une partie secondaire, constituée essentiellement d'amidon(s) non gélatinisé(s) et / ou d' amidon (s) gonflé (s) .

Elle concerne, plus précisément, une composition adhésive aqueuse destinée à l'assemblage de cartons ondulés, dont la partie secondaire est élaborée à partir d'un produit de mélange comportant au moins un amidon de légumineuses et au moins un amidon issu de céréales choisies parmi le maïs et le blé et / ou de tubercules.

Dans ce cas, la partie primaire peut être élaborée à partir d'un seul amidon, notamment de pois, mais peut l'être aussi à partir d'un produit de mélange comportant au moins un amidon de légumineuses et au moins un amidon issu de céréales et / ou de tubercules, notamment à partir du même mélange que celui participant à la partie secondaire.

Elle vise aussi un procédé de préparation de carton ondulé faisant appel à une composition selon l'invention comprenant un produit de mélange tel que défini dans sa partie secondaire et, facultativement, dans sa partie primaire.

Elle concerne encore le carton ondulé obtenu par les moyens selon l'invention.

La présente invention concerne un produit de mélange d'au moins un amidon de légumineuses et d'au moins un amidon issu de céréales choisies parmi le maïs et le blé et / ou de tubercules, et son utilisation pour l'élaboration de la partie secondaire et, facultativement, pour la confection de la partie primaire d'une composition selon l'invention.

Par « légumineuses » au sens de la présente invention, on entend plus particulièrement la famille des papilionacées, dont les représentants les plus importants sont le haricot, le pois, la lentille, la fève, la luzerne, le trèfle, le lupin.

Par « amidon de légumineuses » au sens de la présente invention, on entend les amidons extraits de légumineuses et, en particulier, de pois, présentant notamment une richesse en amidon élevée, en particulier, supérieure à 90% (sec/sec), parallèlement à une teneur très faible, avantageusement inférieure à 1% (sec/sec) en matières colloïdales et en résidus fibreux.

De manière préférentielle, la richesse en amidon est supérieure à 95%, de préférence encore, supérieure à 98% (sec/sec).

Parallèlement, la teneur en protéines est inférieure à 1%, de préférence, inférieure à 0,5%, préférentiellement encore, comprise entre 0,1 et 0,35% (sec/sec).

Par « composition adhésive aqueuse » au sens de la présente invention, on entend toute composition adhésive aqueuse, destinée notamment à la confection de cartons ondulés, comportant une partie d'amidon(s) solubilisé(s) et / ou gonflé(s), dite support ou partie primaire, présentant des propriétés suspensives suffisantes, notamment vis-à-vis d'amidon granulaire, et une partie d'amidon(s) non solubilisé(s) et / ou seulement hydraté(s), c'est-à-dire se trouvant à l'état de granules insolubles et / ou de granules au moins partiellement gonflés, aussi appelée partie secondaire.

De telles compositions faisant appel, en partie secondaire, à un amidon à l'état de granules insolubles, sont souvent élaborées selon les principes connus de l'homme de l'art sous le nom de « procédé Stein-Hall ».

En vertu des règles inhérentes à ce procédé ou à d'autres qui lui sont voisins, comme le procédé dit « MINOCAR » (brevet européen EP 0 038 627), on associe, dans un premier temps, au moins un amidon, de l'eau et un agent alcalin.

Le chauffage de cet ensemble, modéré en cuve ouverte ou vif, à la vapeur ou au moyen d'un cuiseur continu, permet d'obtenir un simple épaississement ou de parvenir à une solution colloïdale alcaline présentant des caractéristiques, notamment rhéologiques et de capacité de maintien en suspension de particules insolubles et / ou seulement hydratées, adaptées.

Cette procédure constitue un mode de préparation de la partie dite « primaire » ou « support ».

Selon d'autres règles suivies pour ces procédés, on prépare, à la température d'alimentation de l'eau, une dispersion rassemblant au moins eau et un ou plusieurs amidons à l'état granulaire. Le plus souvent, on leur associe un dérivé du bore, couramment, le borax. Le lait obtenu forme la partie « secondaire ».

On procède à un mélange soigneux des parties primaire et secondaire selon diverses modalités, continues ou discontinues.

Selon une variante, il est possible d'ajouter à la partie primaire, successivement, eau, amidon(s) granulaire(s) et, le plus souvent, le borax.

Selon une autre variante encore, il est possible de procéder à l'élaboration d'un produit prêt à l'emploi, sous forme de composition commerciale sèche, c'est-à-dire exempte d'eau autre que l'eau de constitution de ses composants, pour laquelle il suffit d'une simple dispersion dans l'eau pour obtenir une composition selon l'invention.

Ladite composition pré-formulée comprend une matière amylacée pré-gélatinisée, issue d'un amidon de légumineuses, d'un amidon de tubercules, d'un amidon de céréales ou d'un de leurs mélanges.

Elle comprend aussi une matière amylacée à l'état de granules insolubles et / ou gonflés, susceptible de constituer la partie secondaire et qui est élaborée à partir d'un produit de mélange comportant au moins un amidon de légumineuses et au moins un amidon issu de céréales choisies parmi le maïs et le blé et / ou de tubercules.

Elle comprend encore une partie minérale susceptible de générer dans l'eau, l'alcalinité recherchée. Il peut s'agir, par exemple, d'un mélange de carbonate de sodium et de chaux éteinte.

Elle comprend enfin, la plupart du temps, un agent porteur de bore tel que le borax.

Il demeure bien entendu que la composition pré-formulée peut, par exemple, ne contenir que la partie pré-gélatinisée et la partie granulaire et / ou pré-gonflée. Dans ce cas, agent alcalin et borax sont ajoutés à l'eau ou à la dispersion de la composition dans l'eau.

Ces procédés conduisent à des compositions aqueuses adhésives dont l'extrait sec final, paramètre essentiel, varie, couramment, entre 20 et plus de 30%.

Un autre procédé, comportant une partie primaire comprenant au moins un amidon solubilisé, et une partie secondaire constituée d'au moins un amidon sous forme de granules, est connu sous le nom de « PRISTIM® » (brevet européen EP 0 229 741, au nom de la Demanderesse).

Dans le cadre de ce procédé, la partie primaire est préparée par augmentation sensible de la température, sans qu'il y ait intervention d'un agent alcalin.

Dans certains cas, toutefois, on maintient une très faible dose dudit agent alcalin, notamment, pour réduire et ajuster la température nécessaire à la gélatinisation.

Quelles que soient les modalités choisies, pour accéder aux parties primaire et secondaire, l'évolution technologique des matériels a conduit l'homme de l'art à s'orienter souvent vers des compositions adhésives aqueuses présentant des extraits secs élevés, élaborées, le plus souvent, à partir d'amidons de céréales et / ou de tubercules.

Une telle démarche offre l'intérêt de diminuer la quantité d'eau à évaporer et de parvenir à un bilan calorique plus favorable mais apparaît, malgré tout, insuffisante.

Une autre solution consiste à utiliser la fécule de pomme de terre, modifiée ou non. Toutefois, la fécule de pomme de terre, solubilisée ou seulement gonflée, ne possède pas, aux extraits secs considérés, qu'elle soit modifiée ou non, une capacité suffisante de maintien en suspension des granules d'amidon de la partie secondaire, quelle qu'en soit la nature, notamment s'il s'agit de fécule de pomme de terre.

De ce seul fait, il découle qu'il est impératif de prévoir, pour la partie primaire ou support, la présence d'une matière amylacée autre que celles issues de fécule de pomme de terre, par exemple, un amidon de pois. Cet aspect a pour conséquence directe la nécessité, pour de telles compositions, de la fourniture d'au moins deux matières amylacées différentes ce qui, dans le cadre des installations actuelles de réception et de préparation, notamment continue, peut constituer un inconvénient majeur à leur utilisation.

Une autre possibilité est offerte par des compositions élaborées à partir d'amidon de légumineuses. En effet, parmi les diverses sources de matières amylacées, celles constituées par les amidons de légumineuses, notamment de pois, peuvent être considérées comme facilement accessibles dans de bonnes conditions, en particulier, économiques.

La proposition correspondante, décrite dans la demande de brevet internationale WO 2004/044082, déposée au nom de la demanderesse n'offre pas toujours, pour intéressante qu'elle soit, toutes les garanties de réponse pleinement satisfaisante à toutes les exigences élevées présentées par les matériels modernes, notamment, du point de vue de l'énergie nécessaire au collage.

L'intervention d'un amidon de légumineuses, l'amidon de pois notamment, y est considérée comme primordiale et essentielle pour la mise en place de compositions qui puissent satisfaire à toutes les exigences présentées par les matériels modernes, notamment en termes de facilité d'approvisionnement, de mise en oeuvre autant qu'en termes de rhéologie et de performances.

Toutefois, l'invention, telle que décrite, recèle des insuffisances plus ou moins graves, jusqu'à être, dans certains cas, tout à fait rédhibitoires.

Par exemple, si les avantages soulignés sont indéniables, du point de vue de la rhéologie notamment, lors de préparations selon le procédé « Stein-Hall », les compositions élaborées sur l'amidon de légumineuses seul ou à partir de mélanges très riches en cet amidon, ne peuvent pas convenir lorsqu'elles sont préparées selon le procédé « MINOCAR ».

En effet, le mode de préparation propre à ce procédé conduit à des compositions qui présentent des textures particulièrement courtes, rédhibitoires et qu'il est tout à fait impossible d'utiliser sur machine. La résolution de ce problème de texture inadaptée réside en une diminution sensible du dosage du dérivé de bore, en général, le borax, laquelle se révèle très néfaste aux propriétés de collage.

De même, des compositions élaborées à partir de l'amidon de légumineuses seul ou à partir de mélanges très riches en cet amidon, ne présentent pas toutes les garanties requises, notamment en termes de stabilité de leur viscosité et du maintien de leur texture lorsqu'elles sont préparées selon le procédé « PRISTIM ».

En regard, il convient de souligner que l'homme de l'art tend à présenter des cahiers des charges et des exigences plus lourdes encore, auxquelles ladite demande ne répond pas.

En effet et en tout premier lieu, l'homme de l'art est à la recherche de solutions satisfaisantes sur le plan technique, quel que soit, en particulier, le profil de sa machine. Ses exigences s'expriment notamment en termes de vitesse de machine, mais aussi, au-delà, en termes de coûts énergétiques qui devront être les plus faibles, tant du point de vue de l'alimentation de la matière cellulosique et de son éventuel préchauffage que pour le collage de micro-cannelures et de nano-cannelures (par exemple, de type G, N, O ou autres) ou de cartons lourds.

Sous ces aspects, l'augmentation de la matière sèche de la composition ou la diminution du point de gélatinisation, si tant est qu'elle puisse être compatible avec une bonne marche de la machine, liée à l'absence d'épaississements indésirables de la colle, ne constituent que des solutions partielles et insuffisantes, notamment, lorsque ladite composition comprend essentiellement de l'amidon de pois, en partie primaire et / ou secondaire.

Sa richesse en amylose, notamment, peut générer, que ce soit à l'alimentation des papiers ou à leur collage, une dépense énergétique que l'homme de l'art n'accepte pas.

En outre, il a été constaté, ces dernières années, d'un point de vue purement technique, que les températures appliquées sur les tables chauffantes de la machine, qui permettent la gélatinisation de l'amidon de la partie secondaire de la composition adhésive, sont de la plus haute importance.

Trop élevées, elles provoquent des problèmes de collage, notamment limité exagérément à la surface du papier et le carton devenant alors cassant.

Ces observations ont conduit à envisager la réduction des capacités de chauffage desdites tables chauffantes, laquelle satisfait aussi l'homme de l'art dans son souci de réduction de la dépense énergétique.

Ces réflexions revêtent une importance d'autant plus grande qu'on peut constater que, sur certaines machines, les profils de chauffage sont sensiblement réduits, voire extrêmement réduits, et nécessitent de nouvelles approches de formulations des compositions utilisées.

En effet, l'apport de vapeur peut être réalisé, dans certains cas, sous pression faible, par exemple, limitée à 2 bars maximum, voire très faible, sur des tables éventuellement qualifiées de froides.

De telles conditions rendent l'homme de l'art de plus en plus exigeant sur ces aspects thermiques. Il souhaite bien sûr, parallèlement, maintenir les vitesses de machine à leur plus haut niveau, répondant ainsi aux critères de productivité et de rentabilité.

De ce point de vue, les enseignements produits dans la demande de brevet internationale WO 2004/044082 ne permettent pas de répondre à toutes ces questions. Ils y répondent d'autant moins que la composition amenée sur machine se trouve à plus basse température.

En particulier, le taux d'amylose relativement élevé de l'amidon de pois, notamment, est susceptible, dans bon nombre de cas, de constituer un handicap dans la mesure où il peut avoir pour conséquence une demande énergétique exagérée, voire rédhibitoire.

Cet aspect est susceptible d'être d'autant plus affirmé que le carton est lourd et qu'il comporte un nombre élevé de collages réalisés, de par le fait de la géométrie du carton produit, à distance des tables de la machine.

L'ensemble des contraintes examinées conduit à considérer que de nouveaux perfectionnements sont nécessaires et qu'il existe bien un besoin réel à poursuivre plus avant et à maîtriser davantage les conditions d'utilisation des amidons de légumineuses.

C'est ainsi qu'il est du mérite de la Demanderesse que d'avoir pu observer, à la suite de nombreux nouveaux travaux entrepris sur les bases de l'utilisation des amidons de légumineuses, et notamment de l'amidon de pois, qu'il existait des solutions particulières présentant un très grand intérêt pour la réalisation de joints de colle sur les matériels les plus performants et les plus élaborés, en particulier dans le cadre de productions particulièrement économiques, notamment pour la confection de cartons lourds et le collage de micro-cannelures.

En effet, elle a pu s'apercevoir que des mélanges binaires, d'amidon de légumineuses, en particulier, de pois, et d'amidon de tubercules, notamment, de fécule de pomme de terre ou de manioc, se révélaient tout à fait intéressants, en particulier, sur le strict plan de la demande énergétique et / ou de la température nécessaire au début de la gélatinisation dudit mélange mais aussi, bien entendu, dans le cadre du respect de l'ensemble de tous les autres critères, nécessaire à l'homme de l'art, de simplicité quant au nombre de matières à mettre en oeuvre, de coût, d'approvisionnement, tant que de performances.

De même, certains autres mélanges binaires, d'amidon de légumineuses, en particulier, de pois, et d'amidon de céréales, choisies parmi le maïs et le blé, présentaient, eux aussi, un intérêt indéniable en termes de dépense énergétique, en toute compatibilité avec l'ensemble des autres exigences.

Il découle de l'ensemble des observations que des mélanges, qualifiés de « ternaires », comprenant à la fois, amidon(s) de légumineuses, amidon(s) de tubercules et amidon(s) de céréales présentent des avantages similaires.

Ces aspects sont d'autant plus surprenants et inattendus que, pris séparément, les amidons de légumineuses, de tubercules et de céréales ne présentent pas ces avantages.

En d'autres termes, la présente invention concerne une composition adhésive aqueuse, destinée au collage du carton ondulé et comportant des parties dites primaire et secondaire, caractérisée en ce que la partie secondaire, constituée d'amidons non gélatinisés et / ou d'amidons gonflés, comprend essentiellement un produit de mélange d'amidon(s) de légumineuses et d'amidon(s) de céréales choisies parmi le maïs et le blé et / ou de tubercules tel que le ratio entre amidon de légumineuses et amidon de céréales et / ou de tubercules est compris entre 30/70 et 90/10, de préférence compris entre 40/60 et 80/20, de préférence encore, compris entre 45/55 et 75/25.

Selon une variante particulière, la présente invention concerne une composition adhésive aqueuse qui est, en outre, caractérisée en ce que la partie primaire, constituée d'amidons gélatinisés et / ou gonflés comprend, elle aussi, et essentiellement, un produit de mélange d'amidon(s) de légumineuses et d'amidon(s) de céréales et / ou de tubercules tel que le ratio entre amidon de légumineuses et amidon de céréales et / ou de tubercules est compris entre 30/70 et 90/10, de préférence compris entre 40/60 et 80/20, de préférence encore, compris entre 45/55 et 75/25.

La présente invention concerne ainsi, notamment, tout procédé d'élaboration de composition présentant une partie primaire, tel qu'exposé précédemment, de type « Stein-Hall », « Minocar », « Pristim » ou tout produit sous forme de composition commerciale sèche.

La Demanderesse insiste aussi sur le fait que la conception même de mélanges permet de faire appel à tout moyen adapté, qu'il s'agisse de mélangeurs de poudre, au fonctionnement continu ou discontinu, de réacteurs thermiques, en phase sèche (mélangeurs « VOMM ») ou en phase lait (technique dite d'« annealing », par exemple) ou de réacteurs thermomécaniques (extrudeurs « simple vis » ou « double vis », par exemple).

Ces possibilités de mélange, qui constituent aussi autant de possibilités de transformation à coût minime, car réalisées en une seule étape, sont susceptibles d'être exploitées, tant pour la matière amylacée de la partie primaire que pour celle de la partie secondaire.

Elles peuvent notamment conduire à l'utilisation d'amidons présentant une majorité de granules gonflés et sensibles à l'action alcaline, en partie primaire comme en partie secondaire.

Ainsi, l'invention n'exclut pas le cas limite où l'amidon de la partie primaire et l'amidon de la partie secondaire se trouvent dans des états physiques voisins, en particulier, de gonflement et d'encombrement stérique, notamment en milieu alcalin.

Des compositions conçues selon les répartitions indiquées, tenant compte de la diversité des machines, tant de leur conception que de leur fonctionnement, permettront de préserver les avantages apportés par l'amidon de pois sans subir l'inconvénient de la teneur élevée en amylose.

L'utilisation de mélanges identiques en partie primaire et en partie secondaire trouve en outre un intérêt primordial pour la fourniture d'une seule matière première.

Il est encore à souligner que, tenant compte des avantages présentés par la fécule de pomme de terre en termes énergétiques, et de ce qui a été décrit précédemment, relativement à l'absence de pouvoir suspensif de la fécule de pomme de terre, solubilisée ou gonflée, vis-à-vis des granules d'amidon notamment, il peut s'avérer très utile d'envisager, dans la conception de la partie primaire, un mélange de fécule de pomme de terre et d'amidon de pois pour lequel les proportions choisies procèderaient de ce seul critère de pouvoir suspensif, conduisant à la prise en compte d'une participation de l'amidon de légumineuses, notamment de pois, éventuellement plus faible que celles préconisées dans les mélanges considérés ci-dessus.

D'autres considérations amènent à relever l'intérêt présenté par la présence de fécule de pomme de terre dans la partie secondaire. Notamment, à l'alimentation des papiers, et dans le cas de leur préchauffage, celle-ci apporte une rétention d'eau faible améliorant la mouillabilité des papiers, et un point de gélatinisation bas permettant un bon collage pour un préchauffage réduit.

C'est ainsi que des ratios fécule de pomme de terre / amidon de pois compris entre 45/55 et 70/30 peuvent se révéler intéressants de ces points de vue, que ce soit en partie primaire et / ou secondaire.

Au-delà, même, de tels choix de proportions accrues de fécule de pomme de terre dans la partie primaire, trouveront leur justification dans une stabilité améliorée des préparations.

En tout état de cause et plus précisément, lesdites compositions adhésives aqueuses sont caractérisées en ce que l'amidon de légumineuses, notamment l'amidon de pois, présente :
- une richesse en amidon supérieure à 90% (sec/sec), de préférence supérieure à 95%, de préférence encore supérieure à 98%,
- une teneur en matières colloïdales et en résidus fibreux inférieure à 1% (sec/sec),
- une teneur en protéines inférieure à 1%, de préférence, inférieure à 0,5%, de préférence encore, comprise entre 0,1 et 0,35% (sec/sec).

L'invention concerne plus particulièrement une composition caractérisée en ce que l'amidon de légumineuses, notamment l'amidon de pois présente une teneur en amylose comprise entre 15 et 60%, de préférence entre 20 et 55%, de préférence encore entre 30 et 52%.

La composition selon l'invention est avantageusement caractérisée en ce qu'elle comprend entre 10 et 40%, en poids, du produit de mélange par rapport à la totalité de ladite composition.

Ces caractéristiques sont d'un intérêt d'autant plus grand que la fabrication concernée s'avère difficile.

On peut en effet considérer, en toute généralité, que la fabrication de carton dit « simple face » (SF) ou « double face » (DF) recèle beaucoup moins de difficultés et, qu'en revanche, celle de cartons « double-double » (DD) ou « triple cannelure », voire de quadri-cannelures ou présentant un nombre plus grand encore de cannelures, de micro-cannelures, de nano-cannelures et / ou de cartons lourds.

Il est aussi du mérite de la demanderesse de proposer un procédé de préparation de carton ondulé adapté aux dites compositions, caractérisé en ce qu'il comprend, au moins une fois, les étapes consistant à distribuer la composition adhésive selon l'invention sur les sommets des cannelures d'une bande de papier préformée, à appliquer un papier ou carton plat sur les sommets de cannelures ainsi revêtus et à procéder à un séchage.

Il est ainsi permis et aisé, par l'usage de compositions selon l'invention et par des moyens adaptés, de procéder à la confection de cartons ondulés satisfaisant aux exigences de la technique, y compris pour la préparation de cartons lourds, multi-cannelures et / ou présentant des micro-cannelures.

Les mélanges, pris au sens de l'invention, constituent, comme il est souhaité, un moyen simple, en particulier, si est exploitée la possibilité laissée d'utilisation d'une matière identique en primaire et en secondaire, peu onéreux, approvisionné aisément, notamment en comparaison aux amidons de tubercules, peu sensible à la réglementation, performant, dès lors que, dans le cadre de formulations adaptées, lesdits mélanges sont réalisés dans les proportions recommandées.

Il est ainsi constaté que le fait de prévoir un mélange d'amidon selon l'invention essentiellement en partie secondaire et, éventuellement, en partie primaire de la composition adhésive, a pour effet d'agir de façon très positive sur l'ensemble des critères énoncés plus haut, soit d'améliorer l'ensemble des paramètres de fonctionnement ainsi que toutes les caractéristiques utiles aux cartons ondulés et, en particulier, d'améliorer sensiblement le « tack », le collage dit « à vert », la vitesse de développement du collage et la qualité dudit collage, tout en réduisant fortement la dépense énergétique nécessaire à l'obtention des résultats escomptés.

Sous ce dernier aspect, il est important de souligner que les compositions selon l'invention sont adaptées et compatibles avec l'apparition, sur certaines machines, de profils de chauffage réduits, notamment d'apport de vapeur sous pression réduite, par exemple, sous pression de 2 bars maximum, et même de tables dites froides.

De façon un peu différente, il a été noté que, sur des machines plus conventionnelles, il était possible, même souhaitable, de réduire sensiblement le nombre et / ou la température des tables chauffantes.

En outre, il s'est avéré que les observations conservent tout leur intérêt, voire un intérêt accru, lorsque la composition est apportée à une température relativement basse.

La Demanderesse considère en outre qu'il est tout à fait possible de se satisfaire, pour la préparation de compositions adhésives selon l'invention, de l'utilisation de mélanges d'amidons de légumineuses, de tubercules et / ou de céréales choisies parmi le maïs et le blé, non modifiés, que ce soit chimiquement ou par tout autre moyen.

Il est toutefois clair que les amidons modifiés, simultanément ou séparément, notamment éthérifiés ou estérifiés, conviennent encore mieux et sont envisagés dans le cadre de l'invention.

Ces matières, qui sont normalement d'un coût plus élevé, peuvent néanmoins trouver leur justification dans les propriétés rhéologiques et dans la stabilité des colles, pour le collage « à vert », le développement et la qualité du collage, ainsi que sa résistance, comparativement aux caractéristiques obtenues avec des amidons non modifiés.

Il est notamment possible d'utiliser des mélanges d'amidons, modifiés ou non, partiellement oxydés ou hydrolysés par l'action d'au moins un acide ou d'une enzyme, pour l'élaboration de compositions à hautes matières sèches, de façon à en adapter la viscosité.

Une autre solution d'intérêt pour la préparation de la partie primaire, consiste à préparer le support en utilisant un dispositif de cuisson dit « à vapeur directe », notamment en continu.

D'autres modifications sont possibles, notamment physiques, par exemple, les opérations thermomécaniques comme la prégélatinisation sur tambours sécheurs ou l'extrusion, ou thermiques, comme celles connues de l'homme de l'art sous le nom de « Hot Moisture Treatment (HMT) » ou d' « Annealing ».

Des polymères, présentant généralement de fortes viscosités, connus pour de tels usages comme les dérivés de la cellulose, des alcools de polyvinyle, des acétates de polyvinyle ou de la polyvinyl-pyrolidone peuvent constituer un apport complémentaire, notamment à la partie primaire.

On recourt, en outre, dès lors que les contraintes industrielles nécessiteront que les joints de colles obtenus par l'utilisation de compositions conformes à l'invention soient résistants à l'humidité ou à l'eau, à des agents de réticulation ou à des résines préformées.

Notamment, les compositions selon l'invention répondent plus aisément aux exigences particulières de résistance à l'humidité ou à l'eau sans nuire à l'environnement, ni desservir les conditions d'hygiène et de salubrité lorsqu'elles contiennent une résine formolée ou non et / ou un agent de résistance à l'eau non synthétique et non formolé judicieusement choisi.

Il a été observé, en particulier, que la proportion choisie en amidon de légumineuses, notamment en amidons de pois, permettait de préserver, toute autre condition étant égale par ailleurs, les avantages conférés de ce point de vue de la tenue à l'humidité ou à l'eau, par l'amidon de légumineuses dès lors que le taux d'amylose de cet amidon était compris entre 15 et 60%, de préférence entre 20 et 55%, de préférence encore, entre 30 et 52%.

Il a été aussi noté qu'il était possible, dans des conditions adaptées de réduire les quantités de résine formolée ou non et / ou d'agent de résistance à l'eau non synthétique et non formolé.

Il a été ainsi constaté, plus précisément, qu'il existait des moyens faciles à mettre en oeuvre qui consistent à utiliser, de façon complémentaire et en quantités faibles, au prix de modifications minimes des formules, des agents améliorant la résistance à l'eau tels que ceux choisis, par exemple, parmi des sels comme les sulfates, en particulier, de zinc, de cuivre ou d'alumine, le phosphate de diammonium ou encore un composé porteur de zirconium.

Il est notamment possible d'associer, dans le cadre d'une composition adhésive selon l'invention, les résines couramment ajoutées pour l'obtention d'une résistance à l'eau convenable, telles que des résines non formolées ou formolées diverses, de type urée-formol, cétone-formol, résorcine-formol ou phénol-formol notamment, présentant généralement une capacité de pontage et / ou un caractère hydrophobe intrinsèque et des sulfates, notamment, de zinc ou d'alumine.

Selon une variante, une composition adhésive selon l'invention, satisfaisante de ce point de vue, est caractérisée en ce qu'elle est exempte de résine formolée ou même de résine synthétique, et comprend une quantité efficace d'un agent chimique choisi parmi les sulfates, notamment, de zinc, d'alumine ou de cuivre, les composés porteurs de zirconium ou le phosphate de diammonium.

Par « quantité efficace », on entend une quantité de résine ou d'agent chimique au moins égale à celle permettant à ladite composition adhésive de conférer au carton ondulé final des caractéristiques de résistance à l'eau répondant aux critères du test FEFCO n°9.

Les différents aspects de la présente invention, relatifs à la formulation et à l'élaboration de compositions adhésives usuelles, vont être décrits de façon plus détaillée à l'aide des exemples qui suivent, qui ne sont aucunement limitatifs.

### Exemple 1 :

On élabore deux compositions adhésives de type « Stein-Hall », l'une conçue à partir du seul amidon de pois natif AP, c'est-à-dire non modifié, selon l'enseignement du document WO 2004/044082, l'autre différant de la première en ce qu'elle comprend, en partie secondaire, un mélange d'amidon de pois natif (AP) et de fécule de pomme de terre native (FPT) dans le ratio 80/20.

L'amidon de pois présente une richesse en amidon supérieure à 95%, une teneur en protéines de 0,30% et en substances colloïdales inférieure à 1%.

La richesse en amylose dudit amidon est de 35,7%.

Les deux compositions obtenues, notamment utiles au collage d'un carton ondulé dit « Triple Cannelure », sont comparées à une formule conventionnelle utilisant, en primaire, l'amidon de maïs natif AM et, en secondaire, la fécule de pomme de terre native FPT.

| Les paramètres essentiels sont les suivants : | Amidon de pois (AP) WO 2004/044082 | Amidon de pois (AP) + fécule de pomme de terre (FPT) (inventive) | Amidon de maïs (AM) / fécule de pomme de terre (FPT) |
|---|---|---|---|
| partie primaire : | | | |
| eau | 370 ml | 370 ml | 370 ml |
| amidon | AP:35 g | AP:33 g | AM:42 g |
| chauffage | 32°C | 32°C | 32°C |
| Soude pure/ eau | 6,3g/10 ml | 6,2g/10 ml | 4,6g/10 ml |
| Agitation | 11minutes | 11minutes | 11minutes |

| partie secondaire : | | | |
|---|---|---|---|
| eau | 665 ml | 665 ml | 665 ml |
| amidon | AP: 414,5g | AP:333g FPT:83,5g | FPT: 407,5g |
| borax | 3,08g | 3,08g | 2,08g |
| agitation | 12 minutes | 12 minutes | 12 minutes |
| Viscosité Lory Viscosité Brookfield Indice réfraction | 30secondes 480 mPa.s 4,3 | 21,5secondes 430 mPa.s 4,1 | 24,5secondes 550 mPa.s 4,3 |

On procède, en laboratoire, à un collage de type dit « Double face » :

| Pt de gélatinisation - partie secondaire après assemblage | 45°C | 46°C | 48,5°C |
|---|---|---|---|
| Collage à vert - 95°C sur appareil Strohlein | | | |
| temps ouvert O.T. 0 | 17,5 sec. | 16 sec. | 12,9sec. |
| temps ouvert O.T. 5 | 12 sec. | 12,9 sec. | 11sec. |

On constate ainsi que, dans le cadre de compositions obtenues et maintenues à basse température, ici 32°C, les enseignements de l'art antérieur présenté dans la demande de brevet internationale WO 2004/044082 ne permettent pas de mettre en évidence, au laboratoire, l'intérêt de l'utilisation de l'amidon de pois, de manière générale, ni même celle d'un mélange, amidon de pois 80% / fécule de pomme de terre 20%, utilisé dans la partie secondaire.

A l'inverse, les observations possibles sur machine, en particulier, en termes de vitesse de la machine et de qualité de collage, indiquent clairement, notamment lors de la réalisation de cartons dits « double-double », « Triple Cannelure » et « quadri cannelure », l'intérêt de l'intervention de l'amidon de pois et des mélanges amidon de pois / fécule de pomme de terre dans les proportions préconisées dans le cadre de l'invention.

Au-delà, les limites des compositions selon l'art antérieur, qu'elles soient élaborées à partir d'amidon de maïs et de fécule de pomme de terre ou du seul amidon de pois, sont d'autant plus évidentes lors de l'abaissement ou de variations dans l'apport énergétique comme, par exemple, ceux suscités par une baisse de pression de la vapeur alimentant la machine.

### Exemple 2 :

On procède maintenant, afin d'appréhender le phénomène constaté, à une comparaison directe sur machine, dans la fabrication de cartons dits « Triple Cannelure », sur la base de compositions de type « Stein-Hall », conçues toutes deux à partir d'amidon de pois natif dans la partie primaire, et comprenant respectivement, dans leur partie secondaire, l'amidon de pois natif ou un mélange selon l'invention, comprenant 70% d'amidon de pois natif et 30% de fécule de pomme de terre native.

On procède à une seconde comparaison, similaire, à partir d'une formule conçue pour le collage de cartons « double-double ».

| Matières : primaire secondaire | Formule pour Triple Cannelure (TC) | Formule pour carton Double-Double (DD) |
|---|---|---|
| Partie primaire : eau | 600 | 600 |
| Amidon de pois | 73 | 82 |
| Chauffage | 30°C | 30°C |
| Soude à | 29 litres | 29 litres |
| agitation | 15 minutes | 15 minutes |
| secondaire : eau | 1500 | 1575 |
| Borax (1^{er} ajout) | 7 | 6 |
| Matière amylacée | A: AP 775 B: AP 542,5 + FPT 232,5 | A: AP 655 B: AP 458,5 + FPT 196,5 |
| Borax (2^{ème} ajout) | 5 | 4 |
| agitation | 15 minutes | 15 minutes |
| Total : eau | 2100 | 2175 |
| Total amylacé | 848 | 737 |
| Matière sèche globale | 28,8% | 26,5% |
| Viscosité Lory Température de gélatinisation | 30 secondes 48°C | 27 secondes 49°C |

Dans le cas de l'utilisation des compositions de type « B », comprenant en partie secondaire, un mélange d'amidon de pois et de fécule de pomme de terre dans le ratio 70/30, on constate sur la machine, une augmentation très sensible de la vitesse de la machine, en regard de la composition de type « A ». Elle est augmentée,, d'environ 50%, pour un réglage des tables chauffantes identique.

Le gain de production enregistré traduit un besoin en énergie thermique, pour parvenir à un collage de qualité, sensiblement inférieur dans le cas de l'utilisation des formules de type B selon l'invention, comparativement aux formules de type A.

Le bilan énergétique apparaît ainsi très favorable au mélange d'amidon de pois et de fécule de pomme de terre.

On constate, en outre, que les formulations A et B présentent des caractéristiques rhéologiques voisines et qu'il est possible de conserver, en conséquence, les mêmes dépose de colle et épaisseur de film.

### Exemple 3 :

On procède à la préparation de deux compositions adhésives de type Stein-Hall, conçues pour le collage de cartons double-double (« DD »), comprenant toutes deux, l'amidon de maïs natif, seul , dans la partie primaire.

La formule C comprend, en partie secondaire, un mélange d'amidon de maïs natif et de fécule de pomme de terre native (exemple comparatif).

La formule D considère, en partie secondaire et comparativement, un mélange d'amidon de maïs natif et d'amidon de pois natif.

| Matières : primaire secondaire | Formule C - secondaire : amidon de maïs - fécule de p. de t. | Formule D -secondaire : amidons de maïs et de pois |
|---|---|---|
| Partie primaire : eau | 960 | 960 |
| Amidon de maïs | 145 | 147 |
| Chauffage | 40°C | 42°C |
| Soude | 48kg | 45kg |
| agitation | 15 minutes | 15 minutes |
| secondaire : eau | 1710 | 1710 |
| Borax (1^{er} ajout) | 6 | 6 |
| Matière amylacée | AM: 300 | AM: 330 (40%) |
| | FPT: 600 | AP: 500 (60%) |
| Borax (2^{ème} ajout) | 5 | 5 |
| agitation | 18 minutes | 18 minutes |
| Total : eau | 2670 | 2670 |
| Total amylacé sec | 884 | 860 |
| Matière sèche globale | 23,35% | 23,15% |
| Viscosité Lory Température de gélatinisation | 25 secondes 51°C | 25 secondes 51°C |

On observe sur la machine que la mise en place de la formule D, comprenant le mélange d'amidon de maïs et d'amidon de pois natifs permet, à des vitesses identiques et des qualités de collage comparables, de diminuer la dépose de colle et de produire un carton plus sec.

Le bilan énergétique est, là aussi, très favorable à l'utilisation d'un mélange selon l'invention comprenant de l'amidon de pois et, cette fois, de l'amidon de maïs.

### Exemple 4 :

On prépare deux compositions E, selon l'invention, et F selon l'art antérieur comprenant en partie secondaire, respectivement, un mélange amidon de maïs natif / amidon de pois natif et un mélange amidon de maïs natif / fécule de pomme de terre native.

La formule E présente, en outre, une partie primaire constituée aussi d'un mélange amidon de maïs natif / amidon de pois natif, ce dernier y étant majoritaire, alors que la formule F ne contient que de l'amidon de maïs natif en primaire.

De telles compositions sont utiles pour le collage dit simple face (« SF »).

| Matières : primaire secondaire | Formule E - primaire et secondaire: AM/AP | Formule F -secondaire : AM/FPT |
|---|---|---|
| Partie primaire : eau Matière amylacée | 1200 AP: 100 (62,5%) AM: 60 (37,5%) | 1200 AM : 167 |
| Chauffage | 40°C | 33°C |
| Soude | 52,5kg | 48kg |
| agitation | 15 minutes | 15 minutes |
| secondaire : eau | 2100 | 2100 |
| Borax (1^{er} ajout) | 7,8 | 7,8 |
| Matière amylacée | AM: 650 (74%) | AM: 805 |
| | AP: 230 (26%) | FPT: 250 |
| Borax (2^{ème} ajout) | 5,4 | 5,4 |
| agitation | 15 minutes | 15 minutes |
| Total : eau | 3300 | 3300 |
| Total amylacé sec | 915 | 1060 |
| Matière sèche globale | 20,7% | 23,1% |
| Viscosité Lory Température de gélatinisation | 18 secondes 52°C | 21 secondes 52°C |

Le bilan énergétique est, là encore, favorable. On l'exprime différemment en soulignant que, pour une même vitesse de fabrication, la qualité du collage est sensiblement supérieure avec la composition E selon l'invention comparativement à la formule F.

### Exemple 5 :

Les deux compositions E et F de l'exemple 4, sont maintenant utilisées pour le collage d'une micro-cannelure de type G. L'obtention d'un collage satisfaisant, avec la formulation F, nécessite l'utilisation de l'ensemble des tables chauffantes de la machine, c'est-à-dire 20 tables alimentées avec une vapeur à 14 bars. En regard , la formulation E a permis de modifier très sensiblement le profil de chauffage. Il a été en effet possible de réduire la pression de vapeur, pour les quatre premières et les six dernières, à 5 bars.

### Exemple 6 :

Un essai industriel est tenté, destiné à établir les performances comparées entre, d'une part, l'amidon de pois seul, utilisé en parties primaire et secondaire et, d'autre part, un mélange à 50% d'amidon de pois et 50% de fécule de pomme de terre, lui aussi, utilisé tant en partie primaire qu'en partie secondaire.

On choisit de mettre en place ces deux types de compositions dans le cadre d'un test considéré comme particulièrement probant, c'est-à-dire sur deux qualités lourdes, distinctes, de carton dit « double-double ».

A partir de préparations à 33% de matières sèches, présentant un point de gélatinisation proche de 48°C, on établit aisément la supériorité de la composition issue du mélange.

En effet, le gain de vitesse atteint 40 mètres par minute. Ce bénéfice est attribué notamment à l'efficacité accrue, lorsque le mélange contient de la fécule de pomme de terre, du préchauffage des papiers, lorsqu'il existe, ainsi qu'à la gélatinisation, plus rapide, de la partie secondaire.

Les trois premiers exemples illustrent l'intérêt que présentent, dans le cadre d'une préparation de type « Stein-Hall », les mélanges réalisés à partir d'amidon de pois, lorsqu'ils sont utilisés dans la partie secondaire de la composition, qu'ils soient d'ailleurs de type « amidon de légumineuses - amidon de tubercules » ou « amidon de légumineuses - amidon de céréales ».

Les trois suivants concernent des compositions où les mélanges sont présents, à la fois, en partie primaire et en partie secondaire.

Les compositions issues de mélanges selon l'invention présentent des comportements rhéologiques, des performances de collage et / ou des avantages financiers certains, face à l'art antérieur. La conclusion demeure valide, notamment quand on les compare à des compositions comprenant le seul amidon de pois en primaire et / ou en secondaire.

### Exemple 7 :

On élabore une composition adhésive de type «Minocar», conçue à partir du seul amidon de pois natif AP, selon les enseignements du document WO 2004/044082.

L'amidon de pois est celui de l'exemple 1, avec une richesse en amidon supérieure à 95%, une teneur en protéines de 0,30% et un taux en substances colloïdales inférieur à 1%. La richesse en amylose est de 35,7%.

Selon le principe régissant cette méthode, on procède en laboratoire au gonflement, dans l'eau, seulement partiel et maîtrisé, à la différence du procédé « Stein-Hall » pour lequel l'amidon primaire est soigneusement gélatinisé, d'une quantité relativement importante d'amidon, laquelle constituera la partie primaire ou support.

Les éléments relatifs à la préparation de la partie primaire de la composition sont les suivants :

| Primaire : | |
|---|---|
| Eau | 765 |
| Amidon de pois | 143 |
| Température | 33°C |
| Soude/eau(g/g) introduction en 5 minutes | 4,9/10 |

L'ensemble est agité à 1750 tours/ minute. La réaction est arrêtée après 9 minutes par addition d'eau destinée à la partie secondaire.

| Secondaire : | |
|---|---|
| Eau | 209 |
| Amidon de pois | 285 |
| Eau | 79 |
| borax | 4,0 |

La préparation, maintenant complète, est agitée pendant 15 minutes à 1750 tours/minute.

On procède ensuite aux mesures de viscosité conventionnelles que sont les viscosités Lory et Brookfield.

Elles affichent, respectivement, 19,5 secondes et 2425 mPa.s, ce qui traduit l'obtention d'une composition présentant une texture extrêmement courte. De cette seule observation, on peut en déduire qu'elle est tout à fait impropre à l'application.

Cette réalité de non-conformité peut être exprimée par l'établissement du rapport B/L (Viscosité Brookfield / Viscosité Lory) qui, égal à 124, apparaît très éloigné des normes retenues par la Demanderesse, lesquelles se situent à 40-50 environ.

### Exemple 8 :

On envisage alors une comparaison entre compositions comportant, respectivement, à la fois dans la partie primaire et dans la partie secondaire :
- l'amidon de pois seul (formule M1),
- un mélange 75% d'amidon de pois - 25% de fécule de pomme de terre (formule M2),
- un mélange 50% d'amidon de pois - 50% de fécule de pomme de terre (formule M3).

Ces trois formulations conduisent à des compositions présentant les caractéristiques suivantes :

| | M1 | M2 | M3 |
|---|---|---|---|
| Primaire : | | | |
| Eau | 765 | 765 | 765 |
| Amidon de pois | 143 | 107,25 | 71,5 |
| Fécule de pomme de terre | 0 | 35,75 | 71,5 |
| Température | 33°C | 33°C | 33°C |
| Soude/eau(g/g) | 5,1/10 | 5,1/10 | 4,9/10 |
| Vitesse d'agitation (trs/mn) | 800 | 800 | 800 |
| Temps de réaction (minutes)- | 10,5 | 9 | 7 |

Pour l'arrêt de la réaction, on introduit l'eau du secondaire sous forte agitation (1750 tours/minute).

| | M1 | M2 | M3 |
|---|---|---|---|
| Secondaire : | | | |
| Eau | 209 | 209 | 209 |
| Amidon de pois | 285 | 213,75 | 142,5 |
| Fécule de pomme de terre | 0 | 71,25 | 142,5 |
| Eau | 79 | 79 | 79 |
| Borax | 4 | 4 | 4 |

On maintient l'agitation durant 15 minutes. Les viscosités et le rapport B/L s'établissent comme suit :

| | M1 | M2 | M3 |
|---|---|---|---|
| Viscosité Lory (secondes) | 16,5 | 18 | 19 |
| Viscosité Brookfield (mPa.s) | 2550 | 990 | 700 |
| Rapport B/L | 154,5 | 55 | 37 |
| Point de gélatinisation | 45°C | 46°C | 46°C |

S'il se confirme que la texture de la composition de type « Minocar », avec le seul amidon de pois, est inadaptée, il s'avère que 25% de fécule de pomme de terre suffisent pour rétablir un rapport B/L convenable.

Au-delà, et ceci est particulièrement vrai pour le mélange 50/50, les compositions selon l'invention permettent un meilleur mouillage des papiers, notamment quand il y a préchauffage à l'alimentation de la machine. La vitesse de prise de la colle en est alors améliorée.

Plus particulièrement encore, de telles formulations permettent, tout comme les compositions de type Stein-Hall, de réduire sensiblement la dépense énergétique tout en autorisant une augmentation de la vitesse de la machine.

### Exemple 9 :

On élabore deux compositions P1 et P2, de type «Pristim», pour lesquelles la partie primaire est obtenue par effet thermique, en l'absence d'un agent alcalin.

P1 est conçue par mise en oeuvre, unique, de l'amidon de pois natif de l'exemple 1 et P2, en utilisant, pour les parties primaire et secondaire, un mélange comprenant 50% d'amidon de pois et 50% de fécule de pomme de terre.

| | P1 (art antérieur) | P2 (selon l'invention) |
|---|---|---|
| Primaire :Eau à 50°C | 618 | 618 |
| Matière amylacée | 73 | 80 |
| 1^{er}chauffage agitation 2000trs/mn | 66°C- 2mn | 64°C-2mn |
| 2^{ème} chauffage agitation 2000trs/mn | 72°C-20mn | 70°C-20mn |
| Secondaire : eau | 1103 | 1103 |
| Borax | 3 | 3 |
| Matière amylacée | 742 | 735 |
| Soude/eau | 2,5/221 | 3,5/221 |
| Borax | 3 | 3 |
| Agitation2000trs/mn | 10mn | 10mn |

A ce stade de la seule préparation, on note que les températures nécessaires à la gélatinisation sont, déjà avec P1, relativement basses, comparativement à celles qu'il est nécessaire d'atteindre avec les autres matières amylacées, notamment, avec les amidons de céréales, de maïs ou de blé.

Avec P2 et l'apport de la fécule de pomme de terre dans le mélange utilisé, la température de gélatinisation est davantage abaissée encore, de 2°C ou plus.

Ces conditions de préparation permettent, à l'échelle industrielle, un stockage à une température suffisamment basse (environ 35°C) pour qu'il ne soit pas nécessaire de prévoir une installation adaptée au maintien de la température telle que, notamment, l'isolation de la cuve.

Les caractéristiques relatives à la viscosité, par écoulement (Lory) et au cisaillement (Brookfield),ainsi que le rapport B/L, sont :

| | P1 | P2 |
|---|---|---|
| Viscosité Lory (secondes) | 15 | 17 |
| Viscosité Brookfield (mPa.s) | 690 | 590 |
| Rapport B/L | 46 | 35 |

Ces données permettent d'émettre un diagnostic de satisfaction assurée quant au comportement des compositions fraîchement préparées.

Les compositions P1 et P2 sont toutefois soumises, au-delà, à un test de vieillissement au stockage pendant 24 heures à température ambiante, puis soumises à un cisaillement à 2000 tours / minutes, de façon à simuler les conditions opératoires sur machine et à observer leur réactivité à la remise en service après arrêt et / ou temps de stockage.

| | P1 | P2 |
|---|---|---|
| 5 minutes à 2000trs/mn | | |
| Viscosité Lory (secondes) | Mesure Impossible | 46 |
| Viscosité Brookfield (mPa.s) | 4500 | 1020 |
| Rapport B/L₅ | - - - | 22 |
| 10 minutes à 2000trs/mn | | |
| Viscosité Lory (secondes) | Sup. à 60 | 27,5 |
| Viscosité Brookfield (mPa.s) | 3900 | 910 |
| Rapport B/L₁₀ | - - - - | 33 |
| 15 minutes à 2000trs/mn | | |
| Viscosité Lory (secondes) | 41 | 20 |
| Viscosité Brookfield (mPa.s) | 2850 | 780 |
| Rapport B/L₁₅ | 69,5 | 39 |

Ces tests de vieillissement et de remise en service des préparations établissent une meilleure aptitude de la composition selon l'invention, face à la composition ne comprenant que le seul amidon de pois.

## Revendications

1. Composition adhésive aqueuse destinée au collage du carton ondulé et comportant des parties dites primaire et secondaire élaborées séparément, **caractérisée en ce que** la partie secondaire, élaborée à partir de, et constituée d'amidons non gélatinisés et / ou d'amidons gonflés, comprend essentiellement un produit de mélange d'amidons de légumineuses et d'amidons de céréales choisies parmi le maïs et le blé et / ou de tubercules tel que le ratio entre amidon de légumineuses et amidon de céréales et / ou de tubercules est compris entre 30/70 et 90/10 de préférence compris entre 40/60 et 80/20, de préférence encore, compris entre 45/55 et 75/25.

2. Composition selon la revendication 1, **caractérisée en ce que** la partie primaire, élaborée à partir de, et constituée d'amidons gélatinisés et / ou d'amidons gonflés, comprend essentiellement un produit de mélange d'amidons de légumineuses et d'amidons de céréales et / ou de tubercules tel que le ratio entre amidon de légumineuses et amidon de céréales et / ou de tubercules est compris entre 30/70 et 90/10, de préférence compris entre 40/60 et 80/20, de préférence encore, compris entre 45/55 et 75/25.

3. Composition selon la revendication 1 ou 2, **caractérisée en ce que** l'amidon de légumineuses et, en particulier, l'amidon de pois, présente:
- une richesse en amidon supérieure à 90% (sec/sec), de préférence supérieure à 95%, de préférence encore supérieure à 98%,
- une teneur en matières colloïdales et en résidus fibreux inférieure à 1% (sec/sec),
- une teneur en protéines inférieure à 1%, de préférence, inférieure à 0,5%, de préférence encore, comprise entre 0,1 et 0,35% (sec/sec).

4. Composition selon l'une quelconque des revendications 1 à 3, **caractérisée en ce que** l'amidon de légumineuses, notamment l'amidon de pois présente une teneur en amylose comprise entre 15 et 60%, de préférence entre 20 et 55%, de préférence encore entre 30 et 52%.

5. Composition selon l'une quelconque des revendications 1 à 4, **caractérisée en ce qu'**elle comprend entre 10 et 40%, en poids, du produit de mélange par rapport à la totalité de ladite composition.

6. Composition selon l'une quelconque des revendications 1 à 5, **caractérisée en ce que** le produit de mélange d'amidon est un mélange d'amidons de légumineuses et d'un amidon essentiellement issu de tubercules, notamment de pomme de terre.

7. Composition selon l'une quelconque des revendications 1 à 6, **caractérisée en ce qu'**elle est sous une forme commerciale sèche, c'est-à-dire exempte d'eau autre que l'eau de constitution de ses composants.

8. Composition selon l'une quelconque des revendications 1 à 7, **caractérisée en ce qu'**elle comprend:
- 0,3 à 5%, en poids, d'une substance alcaline, par rapport à la totalité de ladite composition.
- 0,01 à 5%, en poids par rapport à l'amidon total, de borax ou de tout autre composé chimique porteur de bore.

9. Procédé de préparation de carton ondulé, **caractérisé en ce qu'**il comprend, au moins une fois, les étapes suivantes:
- application sur les sommets des cannelures d'une bande de papier préformée, d'une composition selon l'une quelconque des revendications 1 à 8,
- application d'un papier ou d'un carton plat sur les sommets de cannelures ainsi revêtus de la composition,
- séchage.

10. Carton ondulé **caractérisé en ce qu'**il comprend une composition selon l'une quelconque des revendications 1 à 8.

11. Carton ondulé selon la revendication 10 **caractérisé par le fait qu'**il présente une résistance à l'eau selon les critères définis par le test FEFCO n°9.

12. Utilisation pour le collage de cartons ondulés d'un produit de mélange d'amidons de légumineuses et d'amidons de céréales choisies parmi le maïs et le blé et / ou de tubercules, tel que le ratio entre amidon de légumineuses et amidon de céréales et / ou de tubercules est compris entre 30/70 et 90/10 de préférence compris entre 40/60 et 80/20, de préférence encore, compris entre 45/55 et 75/25, dans lequel l'amidon de légumineuse est un amidon de pois présentant une teneur en amylose comprise entre 15 et 60%, de préférence entre 20 et 55%, de préférence encore entre 30 et 52%.

## Claims

1. Aqueous adhesive composition intended for gluing corrugate cardboard, comprising so-called primary and secondary parts made separately, **characterized in that** the secondary part, made from and constituted of non-gelatinized starches and/or swollen starches, essentially comprises a mixture of legume starches and cereal and/or tuber starches, such that the ratio of legume starch to cereal and/or tuber starch is between 30/70 and 90/10, preferably between 40/60 and 80/20, and still preferably between 45/55 and 75/25, and **in that** the primary part is prepared from pea starch or a mixture comprising at least one legume starch and at least one cereal starch and/or tuber starch.

2. Composition according to claim 1, **characterized in that** the primary part, made from and constituted of gelatinized starches and/or swollen starches, essentially comprises a mixture of legume starches and cereal and/or tuber starches, such that the ratio of legume starch to cereal and/or tuber starch is between 30/70 and 90/10, preferably between 40/60 and 80/20, and still preferably between 45/55 and 75/25.

3. Composition according to claim 1 or 2, **characterized in that** the legume starch, and pea starch in particular, has:
- a starch content greater than 90% (dry/dry), preferably greater than 95%, and, even more preferably, greater than 98%,
- a colloidal and fibrous residue content of less than 1% (dry/dry),
- a protein content of less than 1%, preferably less than 0.5%, and even more preferably, between 0.1 and 0.35% (dry/dry).

4. Composition according to any of claims 1 to 3, **characterized in that** the legume starch, in particular pea starch, has an amylose content of between 15 and 60%, preferably between 20 and 55%, and, even more preferably, between 30 and 52%.

5. Composition according to any of claims 1 to 4, **characterized in that** it comprises between 10 and 40%, by weight, of the mixture relative to the totality of said composition.

6. Composition according to any of claims 1 to 5, **characterized in that** the starch mixture is a mixture of legume starches and of a starch essentially derived from tubers, from potatoes in particular.

7. Composition according to any of claims 1 to 6, **characterized in that** the composition is in a dry commercial form, i.e., containing no water other than the water contained in its components.

8. Composition according to any of claims 1 to 7, **characterized in that** it comprises:
- 0.3 to 5%, by weight, of an alkaline substance relative to the totality of said composition.
- 0.01 to 5%, by weight, relative to the total starch, of borax or any other chemical compound containing boron.

9. Process for preparing corrugated cardboard, **characterized in that** it comprises at least once the following steps:
- applying to the tips of the flutes of a preformed strip of paper, a composition according to any of claims 1 to 8,
- applying a liner or flat cardboard to the tips of the flutes thus coated with the composition,
- drying.

10. Corrugated cardboard **characterized in that** it comprises one composition according to any of claims 1 to 8.

11. Corrugated cardboard according to claim 10, **characterized in that** is water-resistant according to FEFCO test No. 9 criteria.

12. Use for the gluing of corrugated cardboards of a mixture of legume starches, and cereal starches selected from corn and wheat starch and/or tuber starches, such that the ratio of legume starch to cereal and/or tuber starch is between 30/70 and 90/10, preferably between 40/60 and 80/20, and still preferably between 45/55 and 75/25, wherein the legume starch is a pea starch having an amylose content of between 15 and 60%, preferably between 20 and 55%, and still preferably between 30 and 52%.

## Patentansprüche

1. Wässrige adhesive Zusammensetzung zum Kleben von Wellkarton, die getrennt hergestellte so genannte primäre und sekundäre Teile umfasst, **dadurch gekennzeichnet, dass** der sekundäre Teil, hergestellt aus und gebildet aus nicht gelatinisierten Stärken und/oder gequollenen Stärken, im Wesentlichen ein Mischprodukt aus Leguminosenstärken und Getreide- und/oder Knoflenstärken derart umfasst, dass das Verhältnis zwischen Leguminosenstärken und Getreide- und/oder Knoflenstärke zwischen 30/70 und 90/10, vorzugsweise zwischen 40/60 und 80/20, besonders bevorzugt zwischen 45/55 und 75/25 liegt, und dadurch dass der primäre Teil aus Erbsenstärke oder einem Mischprodukt umfassend mindestens eine Leguminosenstärke und wenigstens eine Getreide und/oder Knollenstärke hergestellt wird.

2. Zusammensetzung nach Anspruch 1, **dadurch gekennzeichnet, dass** der primäre Teil, hergestellt aus und gebildet durch gelatinisierte Stärken und/gequollene Stärken, im Wesentlichen ein Mischprodukt aus Leguminosenstärken und Getreide- und/oder Knollenstärken derart umfasst, dass das Verhältnis zwischen Leguminosenstärken und Getreide- und/oder Knoflenstärke zwischen 30/70 und 90/10, vorzugsweise 40/60 und 80/20, besonders bevorzugt zwischen 45/55 und 75/25 liegt

3. Zusammensetzung nach Anspruch 1 oder 2, **dadurch gekennzeichnet, dass** die Leguminosenstärke und insbesondere Erbsenstärke aufweist:
- einen Stärkegehalt von über 90 % (Trockenmasse/Trockenmasse), vorzugsweise über 95%, besonders bevorzugt über 98 %,
- ein Gehalt an Kolloidmaterial und Faserresten von unter 1 % (Trockenmasse/Trockenmasse),
- einen Gehalt an Proteinen von unter 1 %, vorzugsweise unter 0,5 %, besonders bevorzugt zwischen 0,1 und 0,35 % (Trockenmasse/Trockenmasse).

4. Zusammensetzung nach einem beliebigen der Ansprüche 1 bis 3, **dadurch gekennzeichnet, dass** die Leguminosenstärke, insbesondere die Erbsenstärke, einen Amylosegehalt zwischen 15 und 60%, vorzugsweise zwischen 20 und 55 %, besonders bevorzugt zwischen 30 und 52 %, aufweist.

5. Zusammensetzung nach einem beliebigen der Ansprüche 1 bis 4, **dadurch gekennzeichnet, dass** sie zwischen 10 und 40 Gewichtsprozent des Mischprodukts im Verhältnis zur Gesamtheit der Zusammensetzung umfasst.

6. Zusammensetzung nach einem beliebigen der Ansprüche 1 bis 5, **dadurch gekennzeichnet, dass** das Stärkemischprodukt ein Gemisch von Leguminosenstärken und einer im Wesentlichen aus Knollen, insbesondere Kartoffeln, herrührenden Stärke ist.

7. Zusammensetzung nach einem der Ansprüche 1 bis 6, **dadurch gekennzeichnet, dass** sie in kommerzieller Form trocken, d. h. frei von anderem Wasser als dem seine Bestandteile konstituierenden Wasser, ist.

8. Zusammensetzung nach einem beliebigen der Ansprüche 1 bis 7,**dadurch gekennzeichnet, dass** sie umfasst:
- 0,3 bis 5 Gewichtsprozent einer alkalischen Substanz im Verhältnis zur Gesamtheit der Zusammensetzung,
- 0,01 bis 5 Gewichtsprozent im Verhältnis zur Gesamtstärkemenge an Borax oder einer beliebigen anderen borhaltigen chemischen Verbindung.

9. Verfahren zum Herstellen von Wellkarton, **dadurch gekennzeichnet, dass** es wenigstens einmal die folgenden Schritte umfasst:
- Anbringen einer Zusammensetzung nach einem beliebigen der Ansprüche 1 bis 8 an den Scheiteln der Riffel eines vorgeformten Papierbandes,
- Anbringen eines flachen Papiers oder Kartons auf den Scheiteln der so mit der Zusammensetzung beschichteten Riffel,
- Trocknen.

10. Wellkarton, **dadurch gekennzeichnet, dass** er eine Zusammensetzung nach einem beliebigen der Ansprüche 1 bis 8 enthält.

11. Wellkarton nach Anspruch 10, **dadurch gekennzeichnet, dass** er eine Wasserfestigkeit nach den durch den Test FEFCO Nr. 9 definierten Kriterien aufweist.

12. Verwendung eines Mischprodukts von Leguminsosenstärke und Getreidestärke ausgewählt aus Mais und Weizenstärke und/oder Knollenstärke zum Kleben von Wellkarton, wobei das Verhältnis zwischen Leguminosenstärke und Getreide- und/oder Knoflenstärke zwischen 30/70 und 90/10, vorzugsweise zwischen 40/60 und 80/20, besonders bevorzugt zwischen 45/55 und 75/25 liegt, wobei die Erbsenstärke einen Amylosegehalt zwischen 15 und 60 %, vorzugsweise zwischen 20 und 55 %, besonders bevorzugt zwischen 30 und 52 % aufweist.
